# FASCICULE DE BREVET EUROPEEN

(11) **EP 2 507 655 B1**
(45) Date de publication et mention de la délivrance du brevet: **17.07.2013**
(21) Numéro de dépôt: 10787106.3
(22) Date de dépôt: 02.12.2010
(51) Int. Cl.: G02B 5/122, G01S 17/87, G02B 27/14, F41G 3/22

(54) **REFLECTEUR OPTIQUE A LAMES SEMI-REFLECHISSANTES POUR DISPOSITIF DE DETECTION DE POSITION DE CASQUE ET CASQUE COMPORTANT UN TEL DISPOSITIF**
OPTISCHER REFLEKTOR MIT HALBREFLEKTIERENDEN LAMELLEN FÜR EINE POSITIONSERFASSUNGSVORRICHTUNG FÜR EINEN HELM UND HELM MIT EINER DERARTIGEN VORRICHTUNG
OPTICAL REFLECTOR HAVING SEMI-REFLECTIVE BLADES FOR A POSITION DETECTION DEVICE FOR A HELMET, AND HELMET COMPRISING SUCH A DEVICE

(30) Priorité: 04.12.2009 FR 0905866
(43) Date de publication de la demande: 10.10.2012
(73) Titulaire: Thales, 92200 Neuilly-sur-Seine (FR)
(72) Inventeur: POTIN, Laurent, F-33230 Coutras (FR); ROUZES, Siegfried, F-33185 Le Haillan (FR); GERBE, Jean-Pierre, F-33600 Pessac (FR)
(74) Mandataire: Bréda, Jean-Marc
(86) Numéro de dépôt international: PCT/EP2010/068749
(87) Numéro de publication internationale: WO 2011/067341

(56) Documents cités:
- EP-A2- 0 294 101
- FR-A1- 2 488 396
- GB-A- 2 301 968
- US-A- 3 374 044
- US-A- 5 208 641
- US-A- 5 388 059

## Description

Le domaine de l'invention est celui des dispositifs optiques de détection de la position et de l'orientation instantanées du casque porté par un pilote d'aéronef. D'une façon générale, on appellera posture dans la suite du texte une position et une orientation particulière du casque. Pour certaines applications aéronautiques, les casques des pilotes sont munis de dispositifs de visualisation permettant de générer dans le champ de vision du pilote des informations concernant le pilotage, la navigation ou le système d'armes. Ces visuels de casque sont généralement couplés à des systèmes de détection de position et d'orientation du casque.

Il existe différents systèmes permettant de repérer la position d'un casque. On utilise en particulier des systèmes reposant sur l'analyse de signaux optiques représentatifs de la position du casque. Ces systèmes comprennent nécessairement une ou des sources d'émission lumineuse et une ou des sources de réception lumineuse. Les sources d'émission peuvent être des mires lumineuses ou des sources ponctuelles de type diode électroluminescente fixées sur le casque selon une disposition particulière, comme un triangle. La position du casque dans une zone déterminée est alors obtenue par l'analyse des images des diodes reçues par des caméras sous plusieurs points de vue et par calcul géométrique, on déduit la position de la tête dans l'espace. De tels dispositifs ont été réalisés par la société Karl Zeiss/Denel. On peut, à l'inverse, disposer sur le casque des barrettes de photo-capteurs ou des photodiodes et les éclairer par des projecteurs d'images particulières de façon que l'analyse, soit spatiale soit temporelle des signaux reçus par les différents photo-détecteurs permette de retrouver les informations de posture du casque.

Quelle que soit la méthode choisie, le signal détecté est perturbé par l'éclairement solaire. En effet, une partie de l'éclairement solaire est diffusée par le casque vers les caméras de reconnaissance. On sait que l'éclairement solaire peut atteindre 70 000 lux dans le cas d'une verrière de cockpit ayant une transmission de 70 %. Le signal détecté devient peu exploitable dès que l'éclairement solaire reçu par le casque est important. Lorsque les sources d'émission sont sur le casque, leur signal est noyé dans l'éclairement solaire. Lorsque les photo-détecteurs sont sur le casque, le signal reçu en provenance de la source est noyé dans l'éclairement solaire. Le moyen classiquement utilisé pour améliorer la détection consiste à fournir une puissance de source importante. On peut également émettre et recevoir dans une plage de longueurs d'onde située en dehors du rayonnement solaire visible, c'est-à-dire située soit dans l'infrarouge, soit dans l'ultra-violet proche. Cependant, les niveaux d'éclairement solaire sont encore élevés dans les bandes infrarouge et ultraviolet et ce type de solution nécessite des sources d'émission et de réception spécifiques qui augmentent nécessairement les coûts du système de détection.

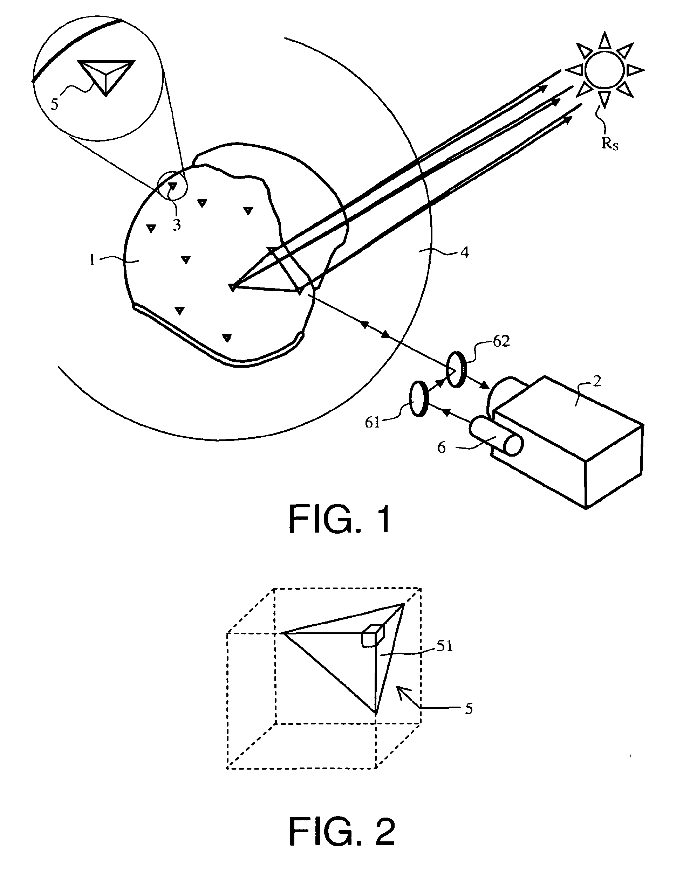

Une autre solution est représentée en figure 1. Elle consiste à disposer sur le casque 1 des mires 3 représentées par des triangles sur cette figure et comportant au moins un premier élément optique 5 de type «catadioptre » ayant un très fort coefficient de rétro-réflexion et un très faible coefficient de diffusion dans le domaine visible. Le dispositif de détection comprend un ensemble de caméras fixes 2 associées à un système de traitement d'images. Ainsi, le rayonnement solaire R_{S} est nécessairement renvoyé dans la direction du soleil comme on peut le voir sur la figure 1 et ne peut atteindre les caméras de détection 2. Pour le fonctionnement de nuit, le dispositif de détection comprend un ensemble de sources de lumière fixes 6 éclairant le casque, le catadioptre 5 ayant un très fort coefficient de rétro-réflexion et un très faible coefficient de diffusion dans le domaine d'émission de la source. Des moyens opto-mécaniques 61 et 62 permettant de réaliser une image de la source de lumière 6 sur l'axe optique de la caméra 2 complètent le dispositif. En utilisant plusieurs mires 3 convenablement réparties sur le casque et plusieurs caméras fixes, il est possible de couvrir tout le volume de débattement 4 du casque.

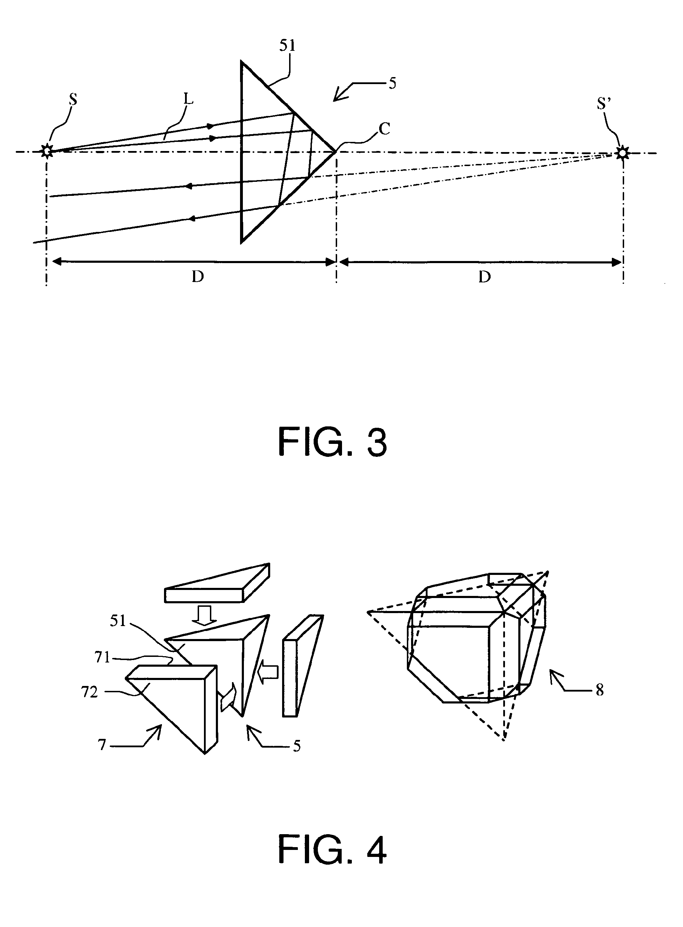

On appelle généralement « catadioptre » tout réflecteur ou rétro-réflecteur optique ayant la propriété de réfléchir un pinceau de lumière dans la même direction que sa direction incidente. Il existe divers moyens optiques de réaliser cette fonction. On s'intéresse plus particulièrement aux catadioptres en « coin de cube » dans la suite de la description. Un « coin de cube » 5 tel que représenté en figure 2 est constitué de trois miroirs plans 51 orthogonaux entre eux. Ainsi, un pinceau de lumière émis par la partie émettrice et éclairant le catadioptre 5 est réémis dans la même direction vers la partie réceptrice avec un rendement excellent comme on le voit sur la figure 3. Cette figure représente la propagation de rayons lumineux L issus d'une source ponctuelle S dans un coin de cube 5. Pour des raisons de clarté, sur cette figure, la propagation des rayons se fait dans un plan parallèle à un des trois miroirs constituant le cube. Dans ce plan, les rayons lumineux ne subissent que deux réflexions sur les miroirs 51. On démontre facilement que l'image de la source S est une source S' située sur un axe SC passant par la source S et le centre C du coin de cube et à égale distance D de celui-ci. De la même façon, tout faisceau lumineux qui n'est pas issu de la source et qui frappe le catadioptre, ne produit, par principe, quasiment aucun éclairement vers la partie réceptrice.

Il est clair que l'emploi d'un seul catadioptre est insuffisant pour réaliser la fonction de position et de l'orientation instantanées du casque. On peut montrer que cette reconnaissance est possible en utilisant entre autres, un tétraèdre dont les quatre sommets sont des catadioptres. A titre d'exemple, un procédé de reconnaissance de la projection 2D d'un tétraèdre est décrit dans le brevet européen EP 0 294 101 de la société El-Op. Dans ce brevet, quatre sources réparties aux quatre sommets d'un tétraèdre donnent quatre points image dans le plan image d'une caméra. A partir de la connaissance des coordonnées projetées des quatre points, on calcule la position du tétraèdre dans l'espace, une fois levées les indéterminations par discrimination des points et l'élimination des configurations aberrantes (quatre points donnés sur un plan correspondent à seize configurations possibles de tétraèdres de géométrie connue mais d'orientation à déterminer).

Bien entendu, la fidélité de la position relative des points a un impact direct sur la précision de mesure de la position. En effet, on peut démontrer que tout défaut dans la géométrie du tétraèdre soit d'origine soit dû à une évolution de la structure va non seulement dégrader la précision de mesure mais encore introduire de nouvelles ambigüités sur la discrimination des points. A titre d'exemple, un écart angulaire de 0.5 mrad sur la position d'un point du tétraèdre entraîne une erreur de 1 mrad sur la mesure. La rigidité du support, qui garantit le respect des cotes relatives de points, est donc cruciale. C'est un handicap certain pour des systèmes qui, étant montés sur la tête de l'utilisateur, doivent rester le plus léger possible.

Le dispositif selon l'invention a pour but de réaliser un système de détection optique de position et d'orientation utilisant des catadioptres particuliers permettant de générer au moyen d'un seul composant les tétraèdres de détection. Ainsi, le dispositif est facilement utilisable dans une grande gamme d'éclairements, de jour avec des éclairements de l'ordre de 100 000 lux et de nuit, avec des éclairements de l'ordre de 0,01 lux, il met en oeuvre des mires en forme de tétraèdre, permettant de déterminer facilement la position et l'orientation du casque dans l'espace. Cette solution a également pour avantage de ne pas nécessiter d'alimentation électrique pour les mires portées par le casque du pilote, d'être particulièrement simple et robuste et de donner des rapports signal/bruit élevés quel que soit l'éclairement. Elle est donc parfaitement adaptée à l'environnement des cockpits d'aéronefs.

Plus précisément, l'invention a pour objet un composant optique pour dispositif optique de détection de position/orientation d'un casque comprenant un « coin de cube » optique, c'est-à-dire un trièdre trirectangle de surfaces planes, caractérisé en ce que chacune des trois surfaces planes comporte une lame plane comportant une première face et une seconde face parallèles entre elles, la première face étant confondue avec la surface plane sur laquelle elle repose, l'interface entre cette première face et ladite surface comportant un traitement semi-réfléchissant.

Avantageusement, le « coin de cube » est un prisme à faces planes constitué d'un matériau transparent, le traitement semi-réfléchissant peut être identique ou différent pour les trois interfaces et la seconde face des lames peut comporter un traitement réfléchissant.

L'invention concerne également un casque comportant au moins un revêtement diffusant la lumière et un composant optique tel que défini précédemment.

L'invention concerne enfin un dispositif optique de détection de position/orientation d'un casque, ledit dispositif comprenant au moins une caméra fixe associée à un système de traitement d'images, une source de lumière fixe, des moyens opto-mécaniques permettant de réaliser une image de la source de lumière sur l'axe optique de la caméra et le casque portant au moins un composant optique tel que défini précédemment.

L'invention sera mieux comprise et d'autres avantages apparaîtront à la lecture de la description qui va suivre donnée à titre non limitatif et grâce aux figures annexées parmi lesquelles :
La figure 1 déjà commentée représente un système de position de détection selon l'art antérieur ;
La figure 2 déjà commentée représente un coin de cube selon l'art antérieur,
La figure 3 représente le fonctionnement optique de ce coin de cube ;
La figure 4 représente en vue éclatée et une vue en perspective d'un coin de cube selon l'invention ;
La figure 5 représente le principe de fonctionnement d'un coin de cube selon l'invention dans un plan ;
La figure 6 représente le principe de fonctionnement d'un coin de cube selon l'invention en perspective ;
La figure 7 représente les différentes images générées dans un coin de cube selon l'invention ;
La figure 8 représente un système de position de détection selon l'invention.

Au lieu de positionner quatre sources de manière précise et de les imager, le composant selon l'invention crée N images virtuelle d'une seule et même source S grâce à une disposition particulière représentée sur les deux vues de la figure 4. Comme on le voit sur la vue de gauche de la figure 4, on dispose sur les trois faces planes 51 d'un coin de cube 5 trois lames 7 à faces planes et parallèles. La première face 71 de chaque lame 7 est disposée sur une face 51, l'interface entre cette première face 71 et la surface 51 comportant un traitement semi-réfléchissant. La seconde face 72 de chaque lame est réfléchissante.

La vue de droite de la figure 4 représente le composant 8 selon l'invention, une fois le coin de cube 5 et les trois lames 7 assemblés et les arêtes du coin de cube étant rabattues (parties en pointillés sur cette vue).

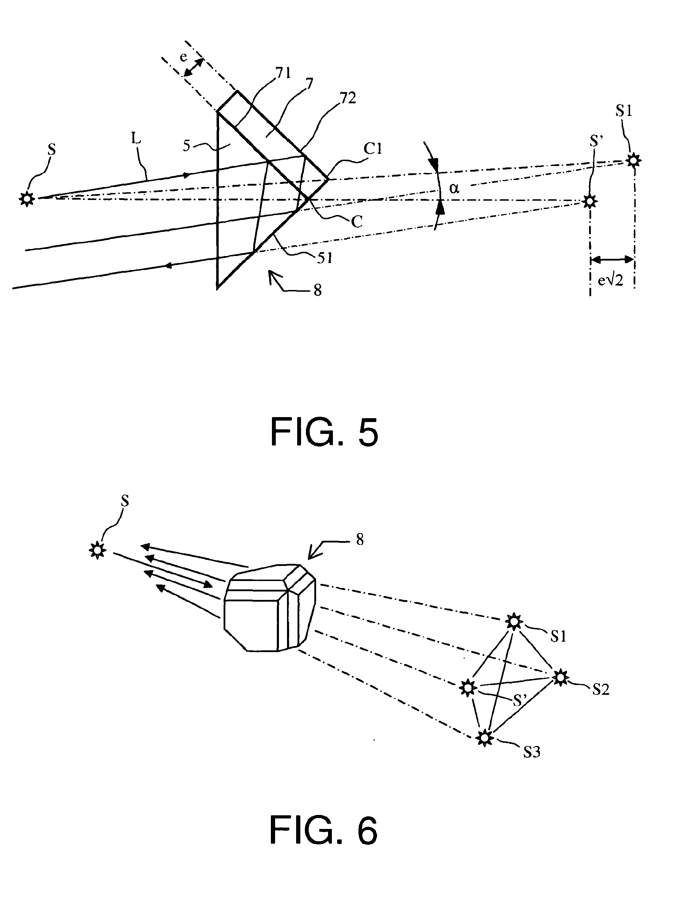

Le fonctionnement du composant optique selon l'invention est décrit sur les figures 5 et 6 qui représentent respectivement l'image donnée par le coin de cube 5 et une seule des trois lames 7, puis l'image donnée par l'ensemble du coin de cube et des trois lames.

Sur la figure 5, une source S ponctuelle est alignée sur un axe SC passant par la source et le centre du coin de cube initial 5. Pour la clarté de l'exposé, S est considéré comme se situant dans le milieu optique du coin de cube initial ou autrement dit, la source S est l'image d'une source S₀ non représentée sur la figure 5 et située dans l'air. Les rayons lumineux issus de la source S vont donc être en partie réfléchis par la surface 51 et en partie transmis. L'ajout de la lame semi-réfléchissante 7 crée ainsi un second coin de cube optique de sommet C1. Le premier coin de cube donne de la source S une première image S' comme précédemment expliqué. Le second coin de cube donne de la source S une seconde image S1. En projection selon l'axe SS', S1 est décalé du double du décalage de CC1 selon le même axe, soit au total e.√2, e étant l'épaisseur de la lame rapportée 7.

L'angle α sous lequel est vu S1 depuis S est le même que celui sous lequel est vu C1 depuis S soit e/(SC√2).

Comme on le voit sur la figure 6, en rapportant sur chaque face du coin de cube une lame réfléchissante d'épaisseur e, trois points images S1, S2, et S3 sont générés à partir de S. Les quatre points S', S1, S2 et S3 forment un tétraèdre dans l'espace. Depuis la source S, les points centraux C1, C2 et C3 sont vus sous le même angle que les points S1, S2 et S3. Les points images S1, S2 et S3 sont répartis autour de S' avec un angle de 60° et une distance constante si les trois lames rapportées ont même épaisseur, l'image renvoyée par le composant optique et formée par l'ensemble des points S',S1, S2 et S3 est donc un tétraèdre virtuel qui renvoie le flux issu de la source S vers elle-même. Ce composant est donc optiquement équivalent à quatre coins de cube disposés en tétraèdre.

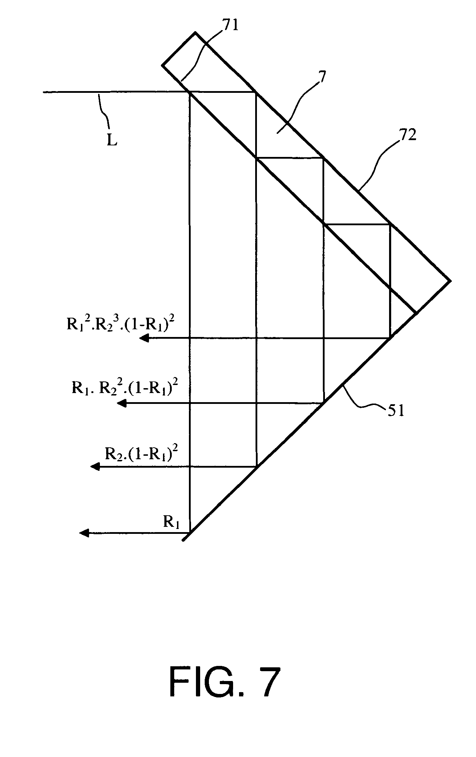

Comme on le voit sur la figure 7, la lame plane semi-réfléchissante génère non seulement les deux images S' et S1 mais également une pluralité d'images issues des réflexions multiples entre les faces de la lame. Sur cette figure, une seule des trois lames est représentée. En notant R₁ et R₂, les coefficients de réflexion des deux faces, on démontre que les coefficients de réflexion des différentes images sont successivement R₁, R₂.(1-R₁)², R₁.R₂².(1-R₁)², R₁².R₂³.(1-R₁)², ... Cependant, seules les images S' et S1 ont des coefficients de réflexion importants. De plus, les autres images peuvent être exploitées dans la mesure où leur position est parfaitement connue. Le traitement semi-réfléchissant peut être identique ou différent pour les trois interfaces. Dans le cas où le traitement est différent pour les trois interfaces, on peut alors différentier les trois images S1, S2 et S3 soit par leurs propriétés photométriques ou colorimétriques.

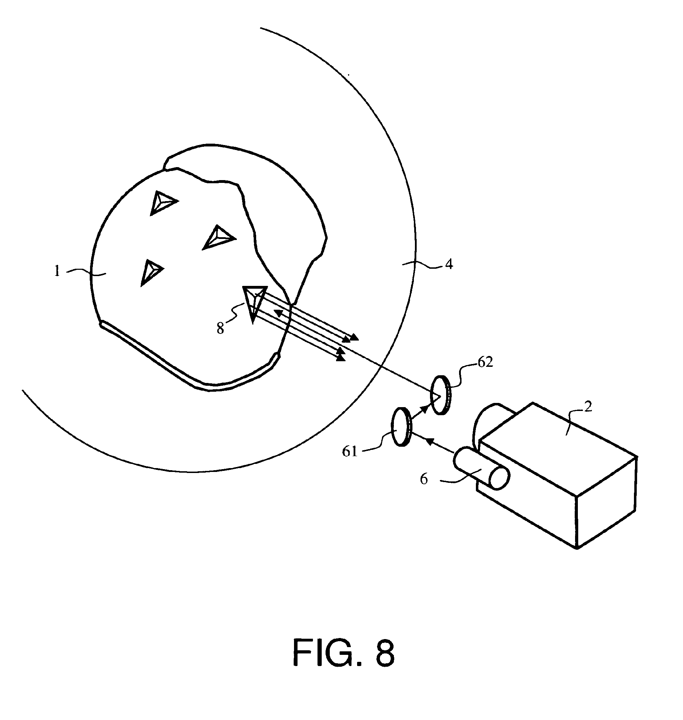

La figure 8 représente une vue d'un système de détection de position complet dont le casque comporte les composants 8 selon l'invention. Comme indiqué sur cette figure, le dispositif comprend un casque 1 porté par un utilisateur mobile dans une zone déterminée 4. Le dispositif selon l'invention est bien adapté pour fonctionner dans un environnement aéronautique comme un cockpit d'aéronef. Dans ce cas, l'utilisateur est un pilote. Cependant, on peut utiliser ce dispositif pour toutes applications nécessitant une connaissance de la posture de la tête de l'utilisateur.

Le casque 1 possède un revêtement diffusant mat, avantageusement de couleur claire et comporte un ensemble de composants 8. Chaque composant 8 est représenté par un tétraèdre sur la figure 8.

La détection des quadruplés d'images donnés par les composants optiques 8 est assurée par un ensemble de caméras 2. Pour des raisons de clarté, une seule caméra est représentée sur la figure 8. Les caméras sont disposées de telle sorte que, quelques soient les mouvements de la tête de l'utilisateur, un certain nombre de composants 8 soient constamment dans le champ des caméras. On estime généralement que trois caméras suffisent. Les caméras peuvent être à capteurs CCD (Charge Coupled Device). La focale et l'ouverture de l'objectif des caméras doivent être choisies suffisamment faibles de façon que les images des sources soient constamment nettes sur la surface photosensible. La résolution de la caméra doit être adaptée à la précision de détection souhaitée. La sensibilité de la caméra doit être suffisante pour que les images données par les sources soient exploitables.

Le dispositif de détection comporte également une ou plusieurs sources de lumière 6 fixes réparties dans le cockpit et associées aux caméras 2. Ces sources 6 ont un angle d'éclairement adapté à celui des caméras. Ces sources 6 doivent fonctionner dans la plage de sensibilité des caméras 2. Ces sources 6 sont préférentiellement des diodes électroluminescentes qui présentent le triple avantage d'une grande compacité, d'une grande robustesse et d'une bonne fiabilité.

Le dispositif de détection comprend des moyens opto-mécaniques permettant de réaliser une image de chaque source de lumière 6 sur l'axe optique de la caméra associée. Dans le cas de la figure 8, ces moyens sont simplement un miroir 61 et une lame semi-réfléchissante 62 assurant le mélange des deux voies source-caméra. Dans ce cas, le rayonnement de la source 6 illuminant le composant catadioptrique 8 revient vers la caméra. Le catadioptre donne alors quatre images apparaissant brillantes sur fond sombre, symbolisées par les quatre flèches de la figure 8.

Il est possible, aux dispositions générales décrites ci-dessus, d'apporter un certain nombre de modifications permettant d'améliorer la détection. Ainsi, la source de lumière peut être modulée temporellement, elle peut être à balayage, être asservie pour éclairer des zones particulières du casque.

Les avantages principaux de ce composant sont:
- Le tétraèdre utilise les propriétés catadioptriques et photométriques du coin de cube et permet de renvoyer le flux issu de la source vers la source, alignée avec la caméra et donc vers la caméra, là ou un autre système introduirait une dépendance du lobe d'émission de la source ;
- Le tétraèdre formé est d'une très grande précision. En effet les coins de cube et les faces sont fabriqués avec des précisions très grandes pouvant atteindre une seconde d'arc, les épaisseurs des facettes peuvent être très régulières tant en épaisseur qu'en planéité.
   Une telle précision ne peut pas être atteinte avec un tétraèdre réel composé de quatre composants ou de quatre sources mécaniquement indépendantes ;

- Le tétraèdre formé est monolithique : la déformation provoque sa destruction, ce qui permet de détecter toute variation de conformation ;
- Le tétraèdre formé est virtuel. Il peut être situé « dans la tête de l'opérateur » vu de la caméra, ce qui permet une latitude de choix de la position du composant optique beaucoup plus grande ;
- La taille du tétraèdre ne dépend que de la distance à la source, et est homothétique de celle-ci, la précision obtenue est donc indépendante de la distance, là où un système tétraédrique réel aurait une précision dépendant de la proximité à la caméra.

## Revendications

1. Composant optique (8) pour dispositif optique de détection de position/orientation d'un casque comprenant un « coin de cube » optique (5), c'est-à-dire un trièdre trirectangle de surfaces planes (51), **caractérisé en ce que** chacune des trois surfaces planes (51), comporte une lame plane (7) comportant une première face (71) et une seconde face (72) parallèles entre elles, la première face (71) étant confondue avec la surface plane (51) sur laquelle elle repose, l'interface entre cette première face et ladite surface comportant un traitement semi-réfléchissant.

2. Composant optique selon la revendication 1, **caractérisé en ce que** le « coin de cube » (5) est un prisme à faces planes constitué d'un matériau transparent.

3. Composant optique selon la revendication 1, **caractérisé en ce que** le traitement semi-réfléchissant est identique pour les trois interfaces.

4. Composant optique selon la revendication 1, **caractérisé en ce que** le traitement semi-réfléchissant est différent pour les trois interfaces.

5. Composant optique selon la revendication 1, **caractérisé en ce que** la seconde face (72) des lames (7) comporte un traitement réfléchissant.

6. Casque pour pilote d'aéronef **caractérisé en ce qu'**il comporte au moins un revêtement diffusant la lumière et un composant optique selon l'une des revendications 1 à 4.

7. Dispositif optique de détection de position/orientation d'un casque, ledit dispositif comprenant au moins une caméra fixe (2) associée à un système de traitement d'images, une source de lumière fixe (6), des moyens opto-mécaniques (61, 62) permettant de réaliser une image de la source de lumière (6) sur l'axe optique de la caméra (2) et un casque (1) selon la revendication 6.

## Patentansprüche

1. Optische Komponente (8) für ein optisches Gerät zum Erkennen der Position/Orientierung eines Helms, umfassend einen optischen "Eckwürfel" (5), d.h. ein flachflächiges Trieder (51) mit drei rechten Winkeln, **dadurch gekennzeichnet, dass** jede der drei flachen Flächen (51) eine flache Platte (7) mit einer ersten Fläche (71) und einer zweiten Fläche (72) aufweist, die parallel zueinander sind, wobei die erste Fläche (71) mit der flachen Fläche (51) übereinstimmt, auf der sie ruht, wobei die Grenzfläche zwischen dieser ersten Fläche und der Fläche eine semi-reflektierende Behandlung aufweist.

2. Optische Komponente nach Anspruch 1, **dadurch gekennzeichnet, dass** der "Eckwürfel" (5) ein Prisma mit flachen Flächen aus einem transparenten Material ist.

3. Optische Komponente nach Anspruch 1, **dadurch gekennzeichnet, dass** die semi-reflektierende Behandlung für die drei Grenzflächen identisch ist.

4. Optische Komponente nach Anspruch 1, **dadurch gekennzeichnet, dass** sich die semi-reflektierende Behandlung für die drei Grenzflächen unterscheidet.

5. Optische Komponente nach Anspruch 1, **dadurch gekennzeichnet, dass** die zweite Fläche (72) der Platten (7) eine reflektierende Behandlung aufweist.

6. Helm für einen Flugzeugpiloten, **dadurch gekennzeichnet, dass** er wenigstens eine lichtstreuende Beschichtung und eine optische Komponente nach einem der Ansprüche 1 bis 4 umfasst.

7. Optische Vorrichtung zum Erkennen der Position/Orientierung eines Helms, wobei die Vorrichtung wenigstens eine mit einem Bildverarbeitungssystem assoziierte feste Kamera, eine feste Lichtquelle (6), optomechanische Mittel (61, 62), mit denen ein Bild der Lichtquelle (6) auf der optischen Achse der Kamera (2) erzeugt werden kann, und einen Helm (1) nach Anspruch 6 umfasst.

## Claims

1. An optical component (8) for an optical device for detecting the position/orientation of a helmet comprising an optical "corner cube" (5), which is a tri-rectangular trihedron with flat surfaces (51), **characterised in that** each of the three flat surfaces (51) comprises a flat plate (7) comprising a first face (71) and a second face (72) that are parallel to each other, said first face (71) being coincident with said flat surface (51) on which it rests, the interface between said first face and said surface comprising a semi-reflective treatment.

2. The optical component according to claim 1, **characterised in that** said "corner cube" (5) is a prism with flat faces made from a transparent material.

3. The optical component according to claim 1, **characterised in that** said semi-reflective treatment is identical for the three interfaces.

4. The optical component according to claim 1, **characterised in that** said semi-reflective treatment is different for the three interfaces.

5. The optical component according to claim 1, **characterised in that** said second face (72) of the plates (7) comprises a reflective treatment.

6. A helmet for an aircraft pilot, **characterised in that** it comprises at least one light-diffusing coating and one optical component according to any one of claims 1 to 4.

7. An optical device for detecting the position/orientation of a helmet, said device comprising at least one fixed camera (2) associated with an image processing system, one fixed light source (6), opto-mechanical means (61, 62) allowing an image of the light source (6) to be produced on the optical axis of said camera (2) and a helmet (1) according to claim 6.
